# FASCICULE DE BREVET EUROPEEN

(11) **EP 0 480 844 B1**
(45) Date de publication et mention de la délivrance du brevet: **27.07.1994**
(21) Numéro de dépôt: 91402731.3
(22) Date de dépôt: 11.10.1991
(51) Int. Cl.: G01P 1/02

(54) **Perfectionnements aux capteurs pourvus d'un surmoulage, notamment aux capteurs de vitesse pour véhicules automobiles**
Verbesserungen an vergossenen Messaufnehmern, insbesondere an Geschwindigkeitsmessaufnehmern für Kraftfahrzeuge
Improvement to potted sensors, especially to speed sensors for motor vehicles

(30) Priorité: 11.10.1990 FR 9012577
(43) Date de publication de la demande: 15.04.1992
(73) Titulaire: JAEGER, F-92303 Levallois-Perret (FR)
(72) Inventeur: Guery, Michel, F-93110 Rosny/Bois (FR); Jaunet, Jean-Claude, F-91370 Verrières le Buisson (FR)
(74) Mandataire: Ahner, Francis

(56) Documents cités:
- EP-A- 0 194 213
- DE-A- 3 628 585
- FR-A- 2 263 519
- FR-A- 2 576 245
- FR-A- 2 608 770

## Description

La présente invention concerne le domaine des capteurs.

La présente invention concerne en particulier, mais non exclusivement, le domaine des capteurs pour véhicules automobiles.

Plus précisément encore la présente invention concerne les capteurs du type comprenant un organe sensible de détection associé à un boîtier et placé dans un carter surmoulé pourvu de moyens de fixation.

La présente invention peut par exemple trouver application dans la réalisation de capteurs de vitesse inductifs pour véhicules automobiles. Cet exemple n'est cependant pas limitatif.

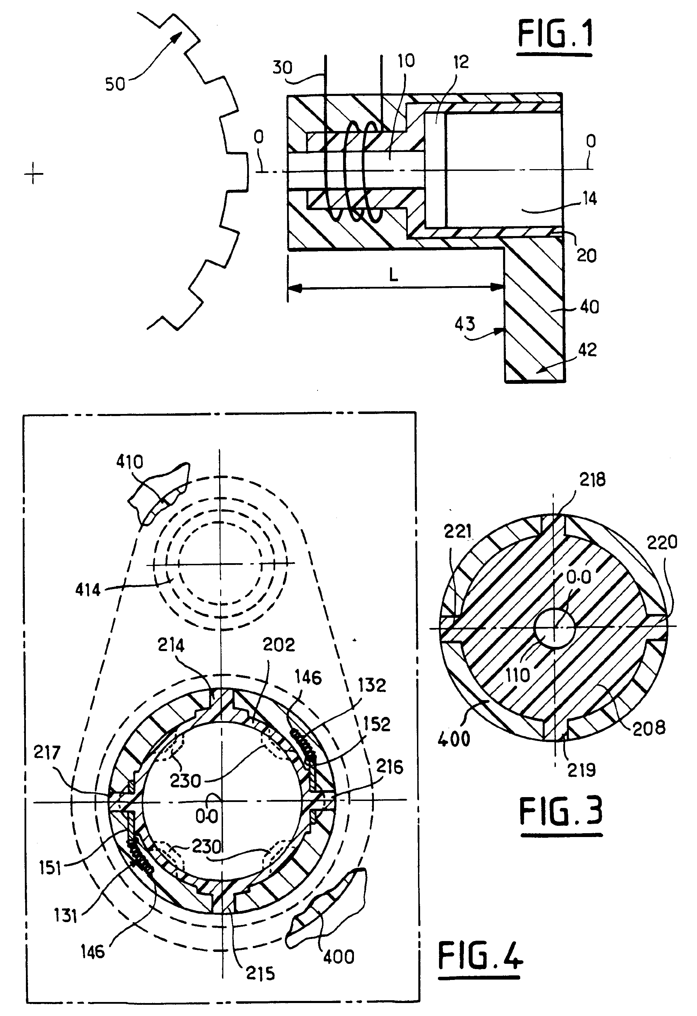

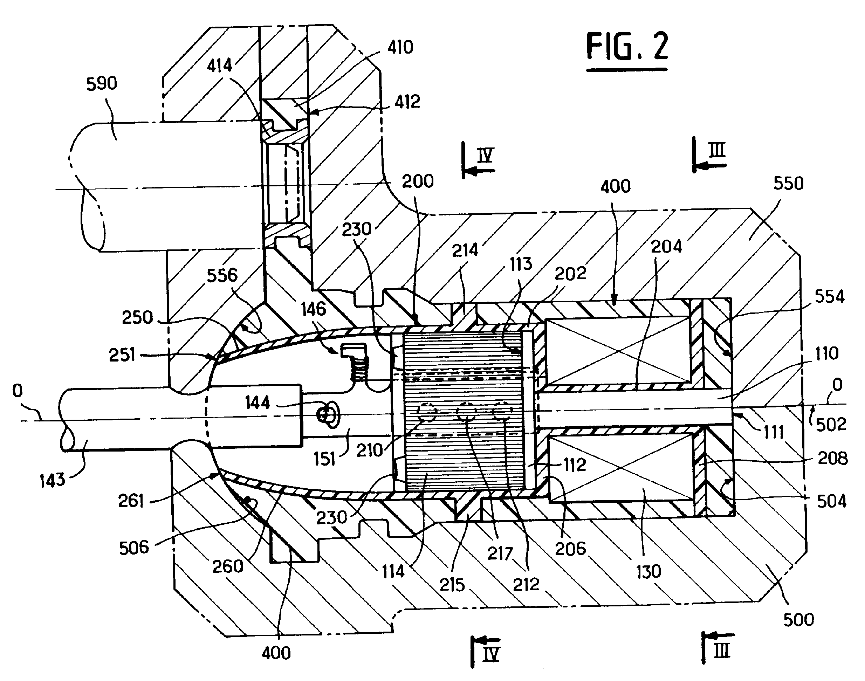

On a représenté schématiquement sur la figure 1 annexée un capteur de vitesse inductif connu.

On aperçoit sur cette figure 1 un noyau 10 associé à une pièce polaire 12 adjacente à l'une de ses extrémités. Le noyau 10 et la pièce polaire 12 sont centrés sur un axe O-O. Un aimant de polarisation 14 également centré sur l'axe O-O repose sur la face de la pièce polaire 12 opposée au noyau 10. Le noyau 10 est généralement formé d'un matériau anisotrope à aimantation axiale. Le noyau 10, la pièce polaire 12 et l'aimant 14 sont placés dans un boîtier 20, généralement un boîtier en matière plastique. Un bobinage 30 est enroulé sur le noyau 10, plus précisément sur la partie du boîtier 20 entourant le noyau 10.

Enfin un carter 40 en matière plastique est surmoulé sur les éléments précités. Le carter 40 assure l'étanchéité du capteur. Il est par ailleurs muni de moyens de fixation, tels que par exemple une patte 42 s'étendant transversalement à l'axe O-O.

Le capteur inductif connu représenté sur la figure 1 est conçu pour détecter la vitesse de rotation d'une roue polaire 50 schématiquement représentée sur la figure 1, placée en regard de l'extrémité libre du noyau 10. L'homme de l'art sait en effet que la rotation de la roue polaire 50 entraîne une variation cyclique de l'entrefer entre la périphérie de la roue polaire 50 et l'extrémité du noyau 10, qui génère un flux variable dans le noyau 10, flux variable qui induit une tension dans la bobine 30.

Il est important lors de la conception de tels capteurs de contrôler avec précision la distance L séparant l'extrémité de l'organe sensible de détection (noyau 10 par exemple) et les moyens de fixation 40 prévus sur le carter surmoulé (plus précisément une face d'appui 43 prévue sur ceux-ci dans le cas le plus général).

Pour tenter de résoudre le problème ainsi posé on a proposé jusqu'ici, lors du surmoulage du carter, de solliciter l'organe sensible de détection en appui contre une face du moule, à l'aide de vérins.

Cette solution ne donne cependant pas totalement satisfaction. La disposition de vérins conduit à une unité de moulage fort complexe. Par ailleurs, les vérins précités sont généralement adaptés pour être effacés lors de la coulée du matériau formant le carter. Il en résulte que l'organe sensible n'est pas maintenu dans le moule lors du moulage du carter.

Le document FR-A-2 263 519 décrit un capteur du type précité à aimant et bobinage. Selon ce document, l'aimant permanent est maintenu fermement contre un noyau magnétique associé, sans intervalle d'air, grâce à la pression d'injection et grâce à un prolongement de l'outil d'injection. Cet outil réserve dans l'ensemble moulé une ouverture qui n'a cependant pas d'influence défavorable. Par ailleurs, selon ce document, le boîtier recevant le noyau magnétique, l'aimant et le bobinage possède sur sa face frontale des appendices d'espacement destinés à favoriser l'arrivée de matière synthétique liquide sur cette face frontale lors d'un surmoulage.

La présente invention a pour but de perfectionner les capteurs existants.

Ce but est atteint selon la présente invention grâce à un capteur du type connu précité comprenant un organe sensible de détection associé à un boîtier et placé dans un carter surmoulé pourvu de moyens de fixation, caractérisé par le fait que le boîtier est muni d'au moins une patte souple apte à venir reposer contre une face d'une coquille du moule destiné à former le carter surmoulé pour exercer sur le boîtier et l'organe sensible de détection, lors de la fermeture du moule, une force sollicitant ledit boîtier et l'organe sensible de détection en appui contre une face de référence du moule.

La présente invention concerne également les moules pour la réalisation des capteurs précités.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 précédemment décrite représente une vue schématique d'un capteur inductif connu,
- la figure 2 représente une vue schématique en coupe longitudinale axiale d'un capteur conforme à un premier mode de réalisation de la présente invention, dans le moule générant le carter,
- la figure 3 représente une vue en coupe transversale du même capteur selon le plan de coupe III-III sur la figure 1,
- la figure 4 représente une vue partielle en coupe selon le plan de coupe référencé IV-IV sur la figure 2 du capteur placé dans le moule,
- la figure 5 représente une vue schématique en coupe longitudinale du boîtier conforme au premier mode de réalisation, selon un plan de coupe orthogonal à celui de la figure 2,
- la figure 6 représente une vue de détail d'extrémités libres de pattes souples prévues sur le boîtier conformément au premier mode de réalisation,
- la figure 7 représente une vue schématique en coupe longitudinale axiale d'un capteur conforme à un deuxième mode de réalisation de la présente invention, dans le moule générant le carter,
- la figure 8 représente une vue schématique en coupe transversale du même capteur placé dans le moule selon le plan de coupe référencé VIII-VIII sur la figure 7,
- la figure 9 représente une vue schématique en coupe longitudinale axiale d'un capteur conforme à un troisième mode de réalisation de la présente invention, dans le moule générant le carter,
- la figure 10 représente une vue schématique en coupe transversale du même capteur placé dans le moule,
- la figure 11 représente une vue schématique en coupe transversale du même capteur selon le plan de coupe référencé XI-XI sur la figure 9, et
- la figure 12 représente une vue schématique en coupe transversale du même capteur selon le plan de coupe référencé XII-XII sur la figure 9.

La description détaillée qui va suivre sera faite en référence à un capteur inductif de vitesse. Ce mode de réalisation n'est cependant pas limitatif.

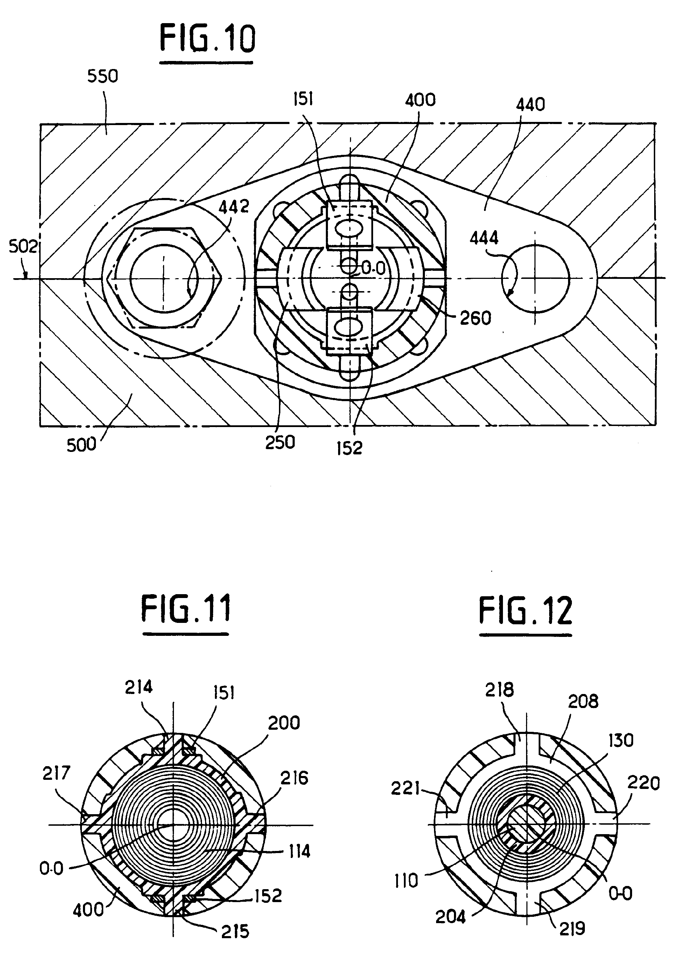

On retrouve sur les figures 2 à 12 annexées les composants de base connus formant un tel capteur inductif de vitesse, à savoir : un noyau 110, une pièce polaire 112, un aimant 114, un boîtier 200, une bobine 130 et un carter extérieur 400.

Le noyau 110 est formé d'un cylindre allongé centré sur un axe principal O-O. Le noyau 110 est formé avantageusement en matériau magnétique doux. Sa face d'extrémité référencée 111, qui est perpendiculaire à l'axe O-O est destinée à être placée en regard de la roue polaire 50 à détecter.

Dans le cas où le capteur est un capteur inductif, le noyau 110 précité doit être accessible à l'extérieur du carter 400.

La pièce polaire 112 est adjacente à la seconde extrémité du noyau. La pièce polaire est également centrée sur l'axe O-O. Elle présente une épaisseur axiale nettement inférieure à celle du noyau 110. En revanche, le diamètre de la pièce polaire 112 est nettement supérieur à celui du noyau 110.

Le cas échéant, la pièce polaire 112 et le noyau 110 peuvent être formés d'une pièce unique.

L'aimant 114 est formé d'une pièce cylindrique centrée sur l'axe O-O. L'aimant 114 est placé contre la face 113 de la pièce polaire 112 qui est opposée au noyau 110.

Comme indiqué précédemment le noyau 110, la pièce polaire 112 et l'aimant 114 sont placés dans le boîtier 200.

Ce boîtier 200 est avantageusement réalisé en matière plastique, très préférentiellement du polyamide 6.6 chargé par exemple à 50% de verre.

En variante on peut envisager de réaliser le boîtier 200 à l'aide d'un autre matériau tel que du métal.

Dans les capteurs connus le boîtier 200 comprend essentiellement un corps 202, un manchon 204 et deux flasques 206, 208.

Le corps 202 est cylindrique du révolution autour de l'axe O-O. Il loge l'aimant 114 et la pièce polaire 112. Le manchon 204 loge le noyau 110. Le flasque 206 s'étend transversalement à l'axe O-O et relie l'extrémité avant du corps 202 à l'extrémité arrière du manchon 204. Le second flasque 208 s'étend également transversalement à l'axe O-O. Il est prévu sur l'extrémité avant du manchon 204.

Le bobinage 130 est formé sur le manchon 204 du boîtier 200, entre les deux flasques 206 et 208.

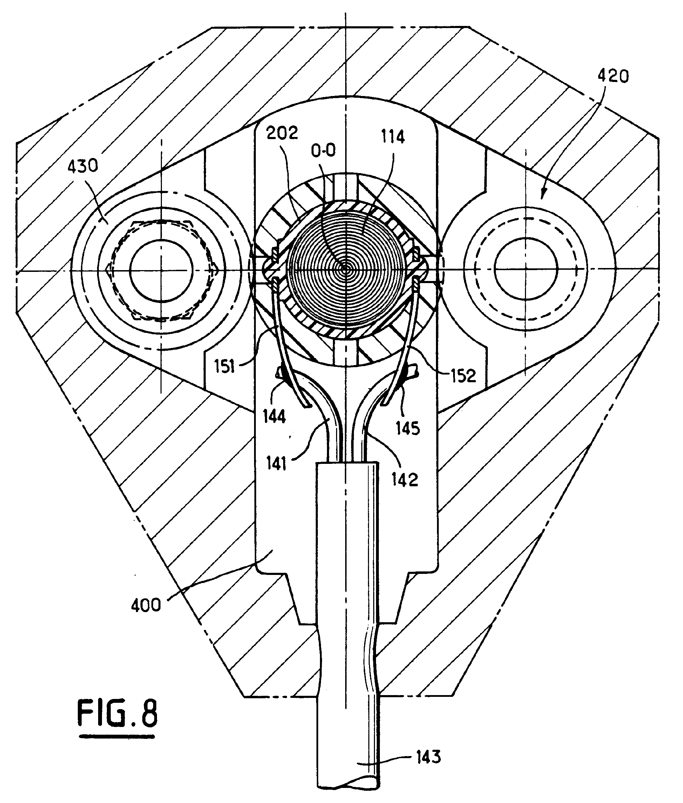

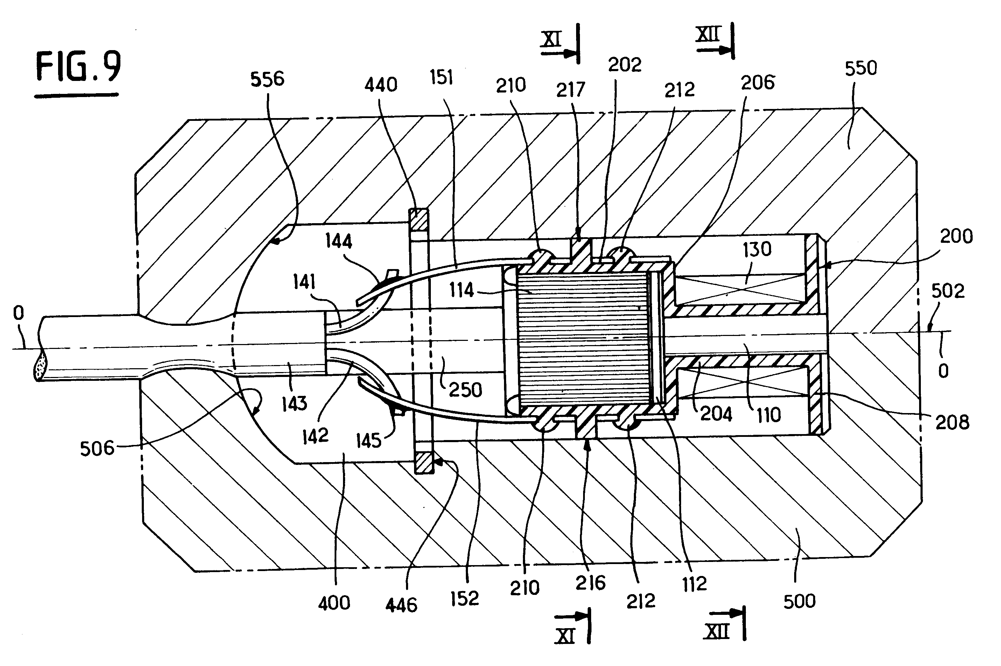

On aperçoit sur les figures annexées, notamment sur les figures 8 et 9, les deux fils de liaison 141, 142 placés dans une gaine 143, destinés à être reliés aux bornes de la bobine 130.

Plus précisément les fils 141, 142 sont reliés aux bornes de la bobine 130 par l'intermédiaire de lames de connexion 151, 152.

Selon le mode de réalisation particulier représenté sur la figure 2, les lames 151, 152 sont fixées sur l'extérieur du corps 202 de boîtier 200. Elles sont diamétralement opposées par rapport à l'axe O-O et s'étendent essentiellement parallèlement à celui-ci. Les lames 151, 152 peuvent être fixées sur le boîtier 200 par tous moyens classiques appropriés. De préférence, les lames 151, 152 sont pourvues d'orifices engagés sur des plots 210, 212 venus de moulage sur la surface extérieure du corps 202. Les plots 210, 212 précités sont ensuite écrasés pour maintenir les lames 151, 152.

Ainsi les fils de liaison 141, 142 peuvent être soudés respectivement sur les lames 151, 152, en arrière de l'aimant 114 comme cela est représenté schématiquement sous la référence 144, 145 sur les figures annexées. Par ailleurs, les fils de sortie de la bobine 130 peuvent être reliés par tous moyens classiques appropriés aux lames 151, 152. Les fils de sortie de la bobine 130 peuvent être soudés sur les lames 151, 152 ou reliés à celles-ci par tous moyens équivalents, par exemple par connection sur des pattes 146 formées sur les lames 151, 152 comme représenté sur la figure 2.

On notera que selon le mode de réalisation représenté sur la figure 2, il est par ailleurs prévu au niveau du corps 202 du boîtier 200, et sur la surface extérieure de celui-ci, quatre pions 214, 215, 216 et 217 équi-répartis autour de l'axe O-O et destinés à venir en contact avec la surface intérieure des coquilles du moule pour centrer le capteur dans ce dernier. Deux des pions précités 216, 217 sont d'ailleurs engagés dans des orifices correspondant ménagés dans les lames de contact 151, 152.

Par ailleurs le flasque avant 208 est également muni de quatre pions 218, 219, 220 et 221, également équi-répartis autour de l'axe O-O et jouant la même fonction que les pions 214 à 217 précités. Les pions 218 à 221 peuvent également être utilisés pour entraîner le corps de capteur à rotation autour de l'axe O-O lors de l'opération de formation du bobinage 130.

On notera que les deux extrémités 131, 132 de la bobine 130, reliées aux pattes 146, sont visibles sur la figure 4.

Pour assembler les éléments du capteur précité, on procède généralement comme suit. Le noyau 110 et la pièce polaire 112 puis l'aimant 114 sont engagés dans le boîtier 200, par l'arrière de celui-ci. Le noyau 110, la pièce polaire 112 et l'aimant 114 sont alors immobilisés axialement dans le noyau 110 par tous moyens classiques appropriés, de préférence par déformations localisées du boîtier 200, plus précisément sous forme de rabats vers l'intérieur, sur l'arrière de l'aimant 114, comme représenté schématiquement sous les références 230 sur les figures 2 et 4.

Le bobinage 130 peut ensuite être formé sur le manchon 204 entre les flasques 206, 208. Puis les lames de liaison 151, 152 sont fixées sur le boîtier 200 et les fils de liaison 141, 142 ainsi que les fils de sortie 131, 132 de la bobine 130 sont fixés respectivement sur ces lames 151, 152.

L'assemblage ainsi formé peut ensuite être placé dans un moule pour la réalisation du carter 400. Celui-ci est de préférence réalisé en polyamide 6.6 chargé à 50% de verre.

Comme indiqué précédemment, selon la caractéristique essentielle de la présente invention, le boîtier 200 est muni d'au moins une patte souple (de préférence plusieurs pattes souples équi-réparties autour de l'axe O-O) apte à venir reposer contre une face d'une coquille du moule destiné à former le carter 400 pour exercer sur le boîtier 200 et l'organe sensible de détection 110, lors de la fermeture du moule, une force sollicitant le boîtier 200 et l'organe sensible de détection 110 en appui contre une face de référence du moule.

En l'espèce, selon le mode de réalisation particulier représenté sur les figures annexées et relatif à un capteur inductif, il s'agit de solliciter la face d'extrémité 111 du noyau 110 contre une face de référence du moule, pour définir une cote précise entre cette face 111 et une face d'appui prévue sur le carter 400.

Par ailleurs, conformément au mode de réalisation préférentiel conforme à la présente invention, comme représenté sur la figure 2, le boîtier 200 est avantageusement muni d'au moins deux pattes souples 250, 260, diamétralement opposées par rapport à l'axe O-O et symétriques par rapport à celui-ci.

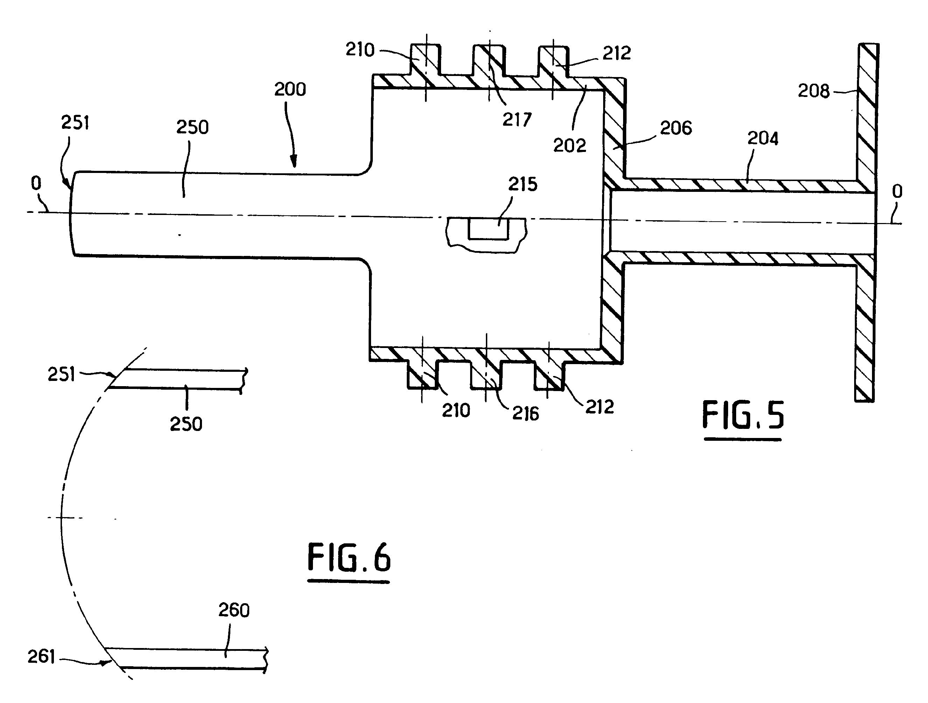

Ces pattes 250, 260 prolongent le corps cylindrique 202 du boîtier 200 vers l'arrière, soit à l'opposé du manchon 204. Au repos, c'est-à-dire avant que le capteur ne soit placé dans le moule, les pattes 250, 260 sont délimitées par des secteurs de cylindres centrés sur l'axe O-O. Les pattes 250, 260 s'étendent ainsi parallèlement à l'axe O-O comme représenté sur la figure 6. Selon le mode de réalisation particulier représenté sur les figures 2 à 6, l'extrémité arrière des pattes 250, 260 est délimitée par des calottes sphériques convexes centrées sur un point qui coïncide avec l'axe O-O.

Selon le premier mode de réalisation représenté sur la figure 2, le cable formé par la gaine 143 et les fils 141, 142 est centré sur l'axe O-O. Les deux coquilles du moule sont référencées respectivement 500 et 550 sur la figure 2. Le plan de joint 502 coïncide avec l'axe O-O. La chambre délimitée par juxtaposition des deux coquilles 500, 550 délimite l'enveloppe du carter 400. La chambre formée par les deux coquilles 500, 550 est conçue pour envelopper l'ensemble des pièces précitées du capteur à l'exception de la surface d'extrémité avant 111 du noyau 110, les surfaces périphériques des pions de centrage 214 à 217 et 218 à 221 et les surfaces arrières 251, 261, d'enveloppe sphérique, des pattes 250, 260. Selon le mode de réalisation représenté sur les figures 2 et 4, la chambre délimitée par les coquilles 500, 550 est conçue pour former une patte de fixation 410 au niveau du carter 400. La patte 410 s'étend essentiellement perpendiculairement à l'axe O-O. Elle possède une face d'appui avant 412 par rapport à laquelle l'extrémité avant 111 du noyau 110 doit présenter un écartement axial contrôlé avec précision.

Le cas échéant comme représenté sur la figure 2 un insert métallique 414 en forme d'oeillet peut être placé dans la patte de fixation 410. Dans ce cas l'insert 414 est maintenu dans la cavité du moule à l'aide d'un tiroir 590 susceptible de translation parallèlement au plan de joint et parallèlement à l'axe O-O.

Les pattes 250, 260 précitées sont conçues pour solliciter le noyau 110 en appui contre une face du moule parallèle à la face d'appui 412 définie par la patte de fixation 410. Les fils de liaison 141, 142 étant disposés axialement, c'est-à-dire selon l'axe O-O et au niveau du plan de joint 502, la face d'appui pour l'extrémité avant 111 du noyau 110, prévue dans la cavité de moulage, s'étend perpendiculairement au plan de joint 502. Plus précisément encore, la face d'appui précitée prévue dans la cavité de moulage est formée pour moitié dans la première coquille 500 sous la référence 504, et pour moitié dans la seconde coquille 550, sous la référence 554.

Par ailleurs, les extrémités libres arrières 251, 261 des pattes 250, 260 sont conçues pour reposer, lors de la fermeture du moule, sur des surfaces 506, 556 prévues respectivement sur les deux coquilles de moule 500, 550.

Ces faces de sollicitation 506, 556 prévues sur les coquilles de moule 500, 550 sont opposées aux faces d'appui 504, 554 précitées servant de référence.

Selon le mode de réalisation représenté sur la figure 2, les faces de sollicitation 506, 556 sont formées de calottes sphériques concaves complémentaires à la fermeture du moule, centrées sur un point qui coïncide avec le plan de joint 502 et l'axe O-O.

Pour réaliser le carter 400 on procède comme suit.

L'ensemble formé par le noyau 110, la pièce polaire 112, l'aimant 114, le boîtier 200, la bobine 130, les lames 151, 152 et le cable 141, 142, 143 est placé dans la coquille fixe 500 du moule. Dans cette position l'extrémité arrière de l'une des lames 250, 260 vient reposer contre la face de sollicitation 506. On notera que dans cette position les plots de centrage 214 à 217 ne reposent pas encore contre la surface interne de la coquille 500. Le moule est alors fermé par déplacement à translation de la coquille 550, en rapprochement de la première coquille 500, perpendiculairement au plan de joint 502. Au cours de ce rapprochement les deux pattes 250, 260 sont sollicitées respectivement par les faces 506, 556 du moule. Elles sont ainsi déformées élastiquement en rapprochement de l'axe O-O. Cette déformation induit sur le boîtier 200 ainsi que sur l'aimant 114, la pièce polaire 112 et le noyau 110 qui lui sont liés un effort axial dirigé vers l'avant de sorte que la face extrême avant 111 du noyau 110 soit plaquée étroitement contre les faces d'appui 504, 554 du moule. On obtient ainsi une cote précise entre l'extrémité avant 111 du noyau 110 et la face d'appui 412 de la patte 410.

En d'autres termes, les pattes souples 250, 260 sont conçues pour transformer la composante de mouvement transversale au plan de joint obtenu lors de la fermeture du moule, en une composante de mouvement parallèle au plan de joint pour solliciter l'organe sensible 110 contre la face de référence 504, 554 du moule.

On notera que dans la mesure où les faces de sollicitation 506, 556 et les extrémités 251, 261 des pattes 250, 260 sont délimitées par des calottes sphériques, il n'est pas nécessaire d'orienter angulairement le capteur autour de l'axe O-O dans le moule.

En variante cependant, on peut envisager de transformer les surfaces de sollicitation 506, 556 en surfaces cylindriques, par exemple délimitées par des génératrices perpendiculaires au plan de coupe de la figure 2, sous réserve de prévoir un détrompage dans le positionnement du capteur, c'est-à-dire sous réserve d'imposer un positionnement angulaire précis du capteur autour de l'axe O-O, de sorte que les pattes 250, 260 soient disposées symétriquement de part et d'autre du plan de joint 502 afin d'être sollicitées correctement par chacune des surfaces 506, 556.

Le mode de réalisation particulier représenté sur la figure 2 peut donner lieu à de nombreuses variantes de réalisation. Par exemple les surfaces de sollicitation 506, 556, sphériques selon la représentation de la figure 2, peuvent être transformées en surfaces tronconiques centrées sur l'axe O-O ou d'une façon plus générale en surfaces obliques sur l'axe O-O ou le plan de joint 502.

Par ailleurs, la surface arrière 251, 261 des pattes 250, 260 pourraient être planes et transversales à l'axe O-O au repos.

Selon encore une autre variante de réalisation, on peut envisager de réaliser les faces de sollicitation 506, 556 perpendiculairement à l'axe O-O, en prévoyant sur les extrémités 251, 261 des pattes 250, 260, des chanfreins obliques sur l'axe O-O, qui convergent vers ce dernier vers l'arrière du capteur, c'est-à-dire en éloignement de l'aimant 114.

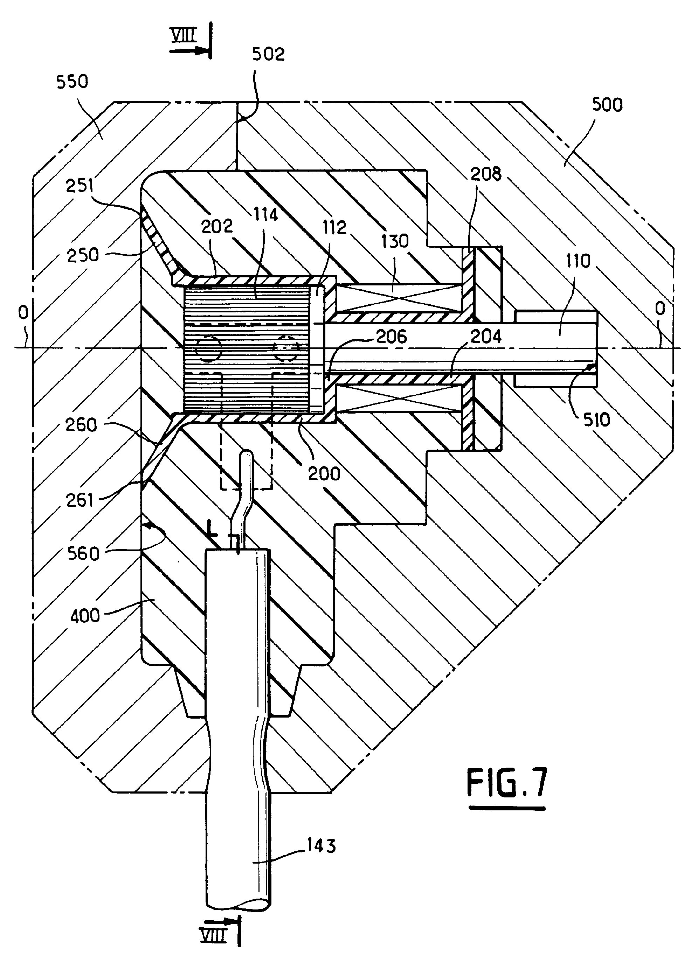

On va maintenant décrire le second mode de réalisation conforme à la présente invention représenté sur les figures 7 et 8. On retrouve sur ces figures un noyau 110, une pièce polaire 112, un aimant 114, une bobine 130, un boîtier 200, les lames de contact 151, 152, les fils de liaison 141, 142 et le carter extérieur 400.

Cependant selon le second mode de réalisation représenté sur les figures 7 et 8, le cable formé par les fils 141, 142 sort du capteur non plus selon l'axe O-O mais perpendiculairement à celui-ci.

Pour cette raison, le plan de joint 502 des deux coquilles 500, 550 est disposé perpendiculairement à l'axe O-O. Lors de la fermeture et de l'ouverture du moule, les deux coquilles 500, 550 sont donc déplacées à translation relative parallèlement à l'axe O-O, de sorte que le cable soit toujours placé au niveau du plan de joint 502.

La face de référence prévue dans le moule pour la face d'extrémité 111 du noyau 110 reste perpendiculaire à l'axe O-O. Cette face d'appui est cette fois formée intégralement dans la coquille 500. Elle est référencée 510 sur la figure 7. La face de sollicitation pour les pattes 250, 260 prévues sur l'arrière du boîtier 200, est formée sur la seconde coquille 550. Cette face de sollicitation est référencée 560. Elle est parallèle à la face de référence 510, c'est-à-dire perpendiculaire à l'axe O-O et parallèle au plan de joint 502.

Dans ce cas, les pattes 250, 260 sont conçues pour retransmettre au boîtier 200 ainsi qu'au noyau 110 et à l'aimant 114 associés l'effort axial (soit transversal au plan de joint) exercé par le moule lors de la fermeture de celui-ci. Selon le mode de réalisation particulier représenté sur la figure 7, les pattes 250, 252 sont conçues pour être écartées par déformation élastique lors de la fermeture du moule. Pour cela, de préférence, les pattes 250, 252 divergent au moins légèrement au repos en direction de leurs extrémités libres arrières.

Pour faciliter le glissement de l'extrémité arrière des pattes 250, 260 sur la face de sollicitation 560 du moule, l'extrémité arrière 251, 261 de ces pattes est de préférence arrondie.

On notera que selon le mode de réalisation représenté sur les figures 7 et 8, la cavité de moulage définie par les coquilles 500, 550 est conçue pour former deux oreilles de fixation 420, 430 au niveau du carter 400. Ces pattes 420, 430 sont diamétralement opposées par rapport à l'axe O-O et disposées à 90° du cable 143.

Les pattes de fixation 420, 430 peuvent être munies chacune d'un insert en forme d'oeillet métallique comme indiqué précédemment sous la référence 414 en regard de la figure 2.

L'homme de l'art comprendra aisément que lors de la fermeture du moule représenté sur la figure 7, l'extrémité avant 111 du noyau 110 est sollicitée en appui contre la face de référence 510 du moule ce qui permet d'obtenir une cote axiale précise entre cette extrémité avant 111 du noyau 110 et la face d'appui prévu sur les pattes de fixation 420, 430.

On va maintenant décrire le troisième mode de réalisation conforme à la présente invention représenté sur les figures 9 à 12.

On retrouve sur ce troisième mode de réalisation, le noyau 110, la pièce polaire 112, l'aimant 114, la bobine 130, le boîtier 200, les lames de liaison 151, 152, les fils 141, 142 et le carter 400. Le cable 141, 142, 143 sort axialement du carter, c'est-à-dire selon l'axe O-O comme dans le premier mode de réalisation représenté sur la figure 2. Le plan de joint 502 du moule coïncide ainsi avec l'axe O-O. La face de référence servant d'appui à l'extrémité 111 du noyau 110 est délimitée pour moitié dans la coquille 500 sous la référence 504 et pour moitié sur la seconde coquille 550 sous la référence 554, perpendiculairement au plan de joint 502. Les faces de sollicitation des pattes 250, 260 sont formées de calottes sphériques concaves 506, 556 prévues respectivement sur les deux coquilles 500, 550 conformément au premier mode de réalisation.

Le troisième mode de réalisation représenté sur les figures 9 à 12 se distingue essentiellement de celui représenté sur les figures 2 à 6 par le fait que selon ce troisième mode de réalisation, il est prévu une bride 440 qui s'étend perpendiculairement à l'axe O-O. La bride 440 définit deux oeillets 442, 444 diamétralement opposés par rapport à l'axe O-O. La bride 440 est placée dans la cavité de moulage de sorte que le carter 400 soit au moins partiellement surmoulé sur celle-ci. La bride 440 définit par sa face avant 446, la face d'appui des moyens de fixation par rapport à laquelle la face d'extrémité avant 111 du noyau 110 doit présenter une cote axiale précise.

Bien entendu la présente invention n'est pas limitée aux modes de réalisation particuliers qui viennent d'être décrits mais s'étend à toutes variantes conformes à son esprit.

On notera que la face d'extrémité 111 du noyau 110 peut soit effleurer la surface externe du carter 400 comme représenté sur les figures 2 et 9, soit faire largement saillie sur le carter comme représenté sur la figure 7.

## Revendications

1. Capteur du type connu comprenant un organe sensible de détection (110) associé à un boîtier (200) et placé dans un carter surmoulé (400) pourvu de moyens de fixation (410 ; 420, 430; 440), caractérisé par le fait que le boîtier (200) est muni d'au moins une patte souple (250, 260) apte à venir reposer contre une face (506, 556 ; 560) d'une coquille du moule destiné à former le carter surmoulé (400) pour exercer sur le boîtier (200) et l'organe sensible de détection (110), lors de la fermeture du moule, une force sollicitant ledit boîtier (200) et l'organe sensible de détection (110) en appui contre une face de référence du moule (504, 554 ; 510).

2. Capteur selon la revendication 1, caractérisé par le fait que le boîtier comprend plusieurs pattes souples (250, 260) équi-répartis autour d'un axe principal (O-O) du capteur.

3. Capteur selon l'une des revendications 1 et 2, caractérisé par le fait que le boîtier comprend deux pattes souples (250, 260) diamétralement opposées par rapport à un axe principal (O-O) du capteur.

4. Capteur selon l'une des revendications 1 à 3, caractérisé par le fait qu'il comprend un noyau (110) en matériau magnétique doux, une pièce polaire (112), un aimant (114) et une bobine (130).

5. Capteur selon l'une des revendications 1 à 4, caractérisé par le fait que que la face de référence du moule est perpendiculaire à l'axe principal (O-O) du capteur.

6. Capteur selon l'une des revendications 1 à 5, caractérisé par le fait qu'il comprend des fils de sortie (141, 142, 143) qui sortent du capteur parallèlement à l'axe principal (O-O) de celui-ci.

7. Capteur selon la revendication 6, caractérisé par le fait que les pattes souples (250, 260) sont conçues pour transformer la composante de mouvement transversale au plan de joint obtenue lors de la fermeture du moule, en une composante de mouvement parallèle au plan de joint pour solliciter l'organe sensible (110) contre la face de référence (504, 554) du moule.

8. Capteur selon l'une des revendications 6 et 7, caractérisé par le fait que des faces de sollicitation (506, 556) sont prévues sur chaque coquille de moule (500, 550).

9. Capteur selon la revendication 8, caractérisé par le fait que les faces de sollicitation (506, 556) sont généralement sphériques.

10. Capteur selon la revendication 8, caractérisé par le fait que les faces de sollicitation sont généralement tronconiques.

11. Capteur selon la revendication 8, caractérisé par le fait que les faces de sollicitation sont cylindriques.

12. Capteur selon la revendication 8, caractérisé par le fait que les faces de sollicitation sont obliques sur le plan de joint (502).

13. Capteur selon l'une des revendications 1 à 12, caractérisé par le fait que les extrémités des pattes souples sont arrondies.

14. Capteur selon l'une des revendications 1 à 13, caractérisé par le fait qu'il comprend des fils de sortie (141, 142, 143) qui sortent du capteur perpendiculairement à l'axe principal (O-O) de celui-ci.

15. Capteur selon la revendication 14, caractérisé par le fait que les pattes souples (250, 260) sont conçues pour transmettre une composante de mouvement transversale au plan de joint (502) obtenue lors de la fermeture du moule.

16. Capteur selon l'une des revendications 14 et 15, caractérisé par le fait que la face de référence (510) et la face de sollicitation (560) sont prévues sur des coquilles différentes du moule.

17. Capteur selon l'une des revendications 14 à 16, caractérisé par le fait que la face (560) de sollicitation des pattes souples (250, 260) est plane et parallèle au plan de joint (502).

18. Capteur selon l'une des revendications 1 à 17, caractérisé par le fait que le boîtier (200) pourvu des pattes souples est réalisé en matière plastique.

19. Capteur selon l'une des revendications 1 à 18, caractérisé par le fait que les pattes souples (250, 260) sont parallèles à l'axe principal (O-O) du capteur, au repos.

20. Capteur selon l'une des revendications 1 à 19, caractérisé par le fait que les pattes souples (250, 260) divergent par rapport à l'axe principal (O-O) du capteur, au repos.

21. Capteur selon l'une des revendications 6 à 8, caractérisé par le fait que des faces de référence (504, 554) sont prévues sur chaque coquille (500, 550) du moule.

## Patentansprüche

1. Meßwertgeber bekannter Art mit einer empfindlichen Erfassungseinrichtung (110), die mit einem Gehäuse (200) verbunden ist und in einem gegossenen Kasten (400) angeordnet ist, der mit Befestigungseinrichtungen (410; 420; 430; 440) versehen ist, dadurch gekennzeichnet, daß das Gehäuse (200) mit wenigstens einem elastischen Flügel (250, 260) versehen ist, der zur Anlage an einer Fläche (506, 556; 560) einer Formschale kommen kann, die dazu bestimmt ist, den gegossenen Kasten (400) zu bilden, um auf das Gehäuse (200) und auf die empfindliche Erfassungseinrichtung (110) beim Schließen der Form eine Kraft auszuüben, die das Gehäuse (200) und die empfindliche Erfassungseinrichtung (110) zur Anlage an einer Bezugsfläche der Form (504, 524; 510) beaufschlagt.

2. Meßwertgeber nach Anspruch 1, dadurch gekennzeichnet, daß das Gehäuse mehrere elastische Flügel (250, 260) umfaßt, die gleichmäßig um die Hauptachse (O-O) des Meßwertgebers verteilt sind.

3. Meßwertgeber nach einem der Ansprüche 1 und 2, dadurch gekennzeichnet, daß das Gehäuse zwei elastische Flügel (250, 260) umfaßt, die bezüglich der Hauptachse (O-O) des Meßwertgebers diametral einander gegenüber angeordnet sind.

4. Meßwertgeber nach einem der Ansprüche 1 bis 3, dadurch gekennzeichnet, daß er einen Kern (110) aus einem weichmagnetischen Material, ein Polstück (112), einen Magneten (114) und eine Spule (130) umfaßt.

5. Meßwertgeber nach einem der Ansprüche 1 bis 4, dadurch gekennzeichnet, daß die Bezugsfläche der Form senkrecht zur Hauptachse (O-O) des Meßwertgebers verläuft.

6. Meßwertgeber nach einem der Ansprüche 1 bis 5, dadurch gekennzeichnet, daß er Ausgangsdrähte (141, 142, 143) umfaßt, die aus dem Meßwertgeber parallel zu seiner Hauptachse (O-O) herausführen.

7. Meßwertgeber nach Anspruch 6, dadurch gekennzeichnet, daß die elastischen Flügel (250, 260) so ausgebildet sind, daß sie die Bewegungskomponente quer zu der Verbindungsebene, die beim Schließen der Form erhalten wird, in eine Bewegungskomponente parallel zur Verbindungsebene umsetzen, um die empfindliche Einrichtung (110) gegen die Bezugsfläche (504, 554) der Form zu beaufschlagen.

8. Meßwertgeber nach einem der Ansprüche 6 und 7, dadurch gekennzeichnet, daß die Beaufschlagungsflächen (506, 556) an jeder Formschale (500, 550) vorgesehen sind.

9. Meßwertgeber nach Anspruch 8, dadurch gekennzeichnet, daß die Beaufschlagungsflächen (506, 556) im wesentlichen Kugelflächen sind.

10. Meßwertgeber nach Anspruch 8, dadurch gekennzeichnet, daß die Beaufschlagungsflächen im wesentlichen Kegelstumpfflächen sind.

11. Meßwertgeber nach Anspruch 8, dadurch gekennzeichnet, daß die Beaufschlagungsflächen Zylinderflächen sind.

12. Meßwertgeber nach Anspruch 8, dadurch gekennzeichnet, daß die Beaufschlagungsflächen schräg zur Verbindungsebene (502) verlaufen.

13. Meßwertgeber nach einem der Ansprüche 1 bis 12, dadurch gekennzeichnet, daß die Enden der elastischen Flügel abgerundet sind.

14. Meßwertgeber nach einem der Ansprüche 1 bis 13, dadurch gekennzeichnet, daß er Ausgangsdrähte (141, 142, 143) umfaßt, die aus dem Meßwertgeber senkrecht zu seiner Hauptachse (O-O) austreten.

15. Meßwertgeber nach Anspruch 14, dadurch gekennzeichnet, daß die elastischen Flügel (250, 260) so ausgebildet sind, daß sie eine Bewegungskomponente quer zur Verbindungsebene (502) übertragen, die beim Schließen der Form erhalten wird.

16. Meßwertgeber nach einem der Ansprüche 14 und 15, dadurch gekennzeichnet, daß die Bezugsfläche (510) und die Beaufschlagungsfläche (560) an verschiedenen Schalen der Form vorgesehen sind.

17. Meßwertgeber nach einem der Ansprüche 14 bis 16, dadurch gekennzeichnet, daß die Beaufschlagungsfläche (560) der elastischen Flügel (250, 260) eben ist und parallel zur Verbindungsebene (502) verläuft.

18. Meßwertgeber nach einem der Ansprüche 1 bis 17, dadurch gekennzeichnet, daß das Gehäuse (200), das mit den elastischen Flügeln versehen ist, aus einem Kunststoffmaterial besteht.

19. Meßwertgeber nach einem der Ansprüche 1 bis 18, dadurch gekennzeichnet, daß die elastischen Flügel (250, 260) im Ruhezustand parallel zur Hauptachse (O-O) des Meßwertgebers liegen.

20. Meßwertgeber nach einem der Ansprüche 1 bis 19, dadurch gekennzeichnet, daß die elastischen Flügel (250, 260) im Ruhezustand bezüglich der Hauptachse (O-O) des Meßwertgebers divergent verlaufen.

21. Meßwertgeber nach einem der Ansprüche 6 bis 8, dadurch gekennzeichnet, daß die Bezugsflächen (504, 554) an jeder Schale (500, 550) der Form vorgesehen sind.

## Claims

1. Sensor of a known type comprising a sensitive detection device (110) associated with a housing (200) and placed in a moulded casing (400) provided with fixing means (410; 420, 430; 440), characterised in that the housing (200) is fitted with at least one flexible lug (250, 260) suitable for coming to rest against one face (506, 556; 560) of a shell of the mould intended to form the moulded casing (400) in order to exert on the housing (200) and the sensitive detection device (110), when the mould is closed, a force pushing the said housing (200) and the sensitive detection device (110) into abutment against a reference face of the mould (504, 554; 510).

2. Sensor according to Claim 1, characterised in that the housing comprises several flexible lugs (250, 260) distributed equally about a principal axis (O-O) of the sensor.

3. Sensor according to one of Claims 1 and 2, characterised in that the housing comprises two flexible lugs (250, 260) diametrically opposite with respect to a principal axis (O-O) of the sensor.

4. Sensor according to one of Claims 1 to 3, characterised in that it comprises a core (110) made from soft magnetic material, a pole piece (112), a magnet (114) and a coil (130).

5. Sensor according to one of Claims 1 to 4, characterised in that the reference face of the mould is perpendicular to the principal axis (O-O) of the sensor.

6. Sensor according to one of Claims 1 to 5, characterised in that it comprises output wires (141, 142, 143) which emerge from the sensor parallel to the principal axis (O-O) of the latter.

7. Sensor according to Claim 6, characterised in that the flexible lugs (250, 260) are designed to convert the movement component transverse to the parting plane obtained when the mould is closed into a movement component parallel to the parting plane in order to push the sensitive device (110) against the reference face (504, 554) of the mould.

8. Sensor according to one of Claims 6 and 7, characterised in that pushing faces (506, 556) are provided on each mould shell (500, 550).

9. Sensor according to Claim 8, characterised in that the pushing faces (506, 556) are spherical overall.

10. Sensor according to Claim 8, characterised in that the pushing faces have overall the shape of a truncated cone.

11. Sensor according to Claim 8, characterised in that the pushing faces are cylindrical.

12. Sensor according to Claim 8, characterised in that the pushing faces are oblique to the parting plane (502).

13. Sensor according to one of Claims 1 to 12, characterised in that the ends of the flexible lugs are rounded.

14. Sensor according to one of Claims 1 to 13, characterised in that it comprises output wires (141, 142, 143) which emerge from the sensor perpendicular to the principal axis (O-O) of the latter.

15. Sensor according to Claim 14, characterised in that the flexible lugs (250, 260) are designed to transmit a movement component transverse to the parting plane (502) obtained when the mould is closed.

16. Sensor according to one of Claims 14 and 15, characterised in that the reference face (510) and the pushing face (560) are provided on different shells of the mould.

17. Sensor according to one of Claims 14 to 16, characterised in that the face (560) pushing the flexible lugs (250, 260) is plane and parallel to the parting plane (502).

18. Sensor according to one of Claims 1 to 17, characterised in that the housing (200) provided with the flexible lugs is produced from plastic.

19. Sensor according to one of Claims 1 to 18, characterised in that the flexible lugs (250, 260) are parallel to the principal axis (O-O) of the sensor, at rest.

20. Sensor according to one of Claims 1 to 19, characterised in that the flexible lugs (250, 260) diverge with respect to the principal axis (O-O) of the sensor, at rest.

21. Sensor according to one of Claims 6 to 8, characterised in that the reference faces (504, 554) are provided on each shell (500, 550) of the mould.
